# EUROPEAN PATENT SPECIFICATION

(11) **EP 2 241 100 B1**
(45) Date of publication and mention of the grant of the patent: **22.08.2018**
(21) Application number: 09701248.8
(22) Date of filing: 08.01.2009
(51) Int. Cl.: H04M 11/00, G06Q 30/02, H04W 4/00, H04W 4/24

(54) **MOBILE APPLICATION MONITORING SYSTEM**
ÜBERWACHUNGSSYSTEM FÜR MOBILE ANWENDUNGEN
SYSTÈME DE SURVEILLANCE D'APPLICATION MOBILE

(30) Priority: 09.01.2008 US 971544; 17.10.2008 US 253894
(43) Date of publication of application: 20.10.2010
(73) Proprietor: T-Mobile USA, Inc., Bellevue, WA 98006-1350 (US)
(72) Inventor: MCKERLICH, Ian, Bellevue WA 98006-1350 (US); MCNEEL, Warren, Bellevue WA 98006-1350 (US); ESPINOZA-DAWSON, Venetia, Bellevue WA 98006-1350 (US); STOREY, Marvin, Edward, Bellevue WA 98006-1350 (US); ZERBE, James, Steven, Bellevue WA 98006-1350 (US)
(74) Representative: Grünecker Patent- und Rechtsanwälte PartG mbB
(86) International application number: PCT/US2009/030473
(87) International publication number: WO 2009/089374

(56) References cited:
- WO-A2-2007/140007
- US-A1- 2002 198 847
- US-A1- 2005 028 188
- US-A1- 2006 036 494
- US-A1- 2007 299 789
- US-B2- 6 968 175

## Description

### BACKGROUND

Although there has been an explosion of software applications that operate on personal or business computers coupled to broadband networks such as cable, DSL, or satellite, to date there has not been a corresponding increase in software applications that operate on mobile devices over mobile networks such as cellular networks. In part, the disparity in number of applications may be caused by the difference in form and computational capability of the accessing device. Personal or business computers are typically more powerful and have a greater display size which facilitates the development of applications. This distinction has started to lessen, however, with the advent of smart phones that have significantly greater processing power and greater screen sizes. In part, the disparity in number of applications may be caused by the fees associated with network use. Fixed broadband subscribers typically pay a flat rate for unlimited broadband use from a personal or business computer. In contrast, mobile device users typically pay a variable amount that depends on the actual bandwidth utilized by the device. Because mobile device users are typically required to pay for bandwidth charges in mobile applications, the number of applications for mobile devices may not increase significantly until an efficient way to charge for such applications is developed.

US 2007/0299789 A1 discloses a method of monetizing a software application for mobile devices. The initial step is developing a software application designed to operate on a mobile device, which is followed by determining a transaction unit for the application. The program proceeds by estimating the bandwidth usage of the application, determining a pricing model for the application and deploying the application, based on the pricing model. Finally, the program performs the step of monitoring consumer usage of the application and adjusting the pricing model as required.

The object of the present invention is to provide an improved system and method for sharing revenue between an application provider assoicated with an application that operates on a mobile device and a network operator that operates a wireless telecommunications network that is utilized by the mobile device.

This object is solved by the subject matter of the independent claims.

Preferred embodiments are defined by the dependent claims.

### BRIEF DESCRIPTION OF THE DRAWINGS

Figure 1 is a block diagram of a representative environment in which a mobile application monitoring system operates.
Figures 2A and 2B are a flow chart of a testing, monitoring, auditing, and compensation process implemented by the mobile application monitoring system.
Figure 3 is a block diagram of a variable reward table utilized in the compensation process by the mobile application monitoring system.
Figure 4 is a screenshot of a dashboard used to monitor the performance of a mobile application.

### DETAILED DESCRIPTION

A method and system to test, monitor, and share revenue associated with third-party software applications operating on mobile devices over a network operator's wireless network is disclosed (hereinafter referred to as the "mobile application monitoring system"). Before an application is allowed to be installed on a mobile device, the application may be tested by the mobile application monitoring system to simulate the expected load of the application on a mobile device, to simulate the expected load of the application on the wireless network utilized by the mobile device, and to determine any services utilized by the application. Based on the simulation, the system determines a compensation arrangement under which revenue associated with the application will be shared between the network operator and the application provider. Provided the application is otherwise in compliance with network operator requirements, the application is allowed to be distributed to mobile devices operating over the wireless network.

In some embodiments, the compensation arrangement is determined from a variable reward table. One axis of the variable reward table measures the complexity and/or value of services that the application utilizes. The other axis of the variable reward table measures the amount of network and/or device resources that are consumed by the application. Each axis of the table is divided into ranges, resulting in a grid of cells with each cell reflecting a different cost of running the application over the network. Each cell in the table may be assigned a revenue share or other compensation value that the application provider agrees to share with the network operator in order for the application provider's application to run on the network. In some embodiments, the application provider will receive a larger amount of revenue the less the complexity or value of services that the application relies upon and the less impact the application has on the mobile devices and/or network. Conversely, the application provider will receive a smaller amount of revenue the greater the complexity or value of services that the application relies upon and the greater the impact the application has on the mobile device and/or network. By sharing revenue inversely with an application's impact on customers and on the network operator, the application provider is economically encouraged to efficiently code their application and make beneficial design choices during development.

In some embodiments, the mobile application monitoring system monitors the performance of an application after the application has been installed on mobile devices and begins operating over the network. The actual performance of the application is compared with the predicted performance of the application. If the actual performance of the application is different than the expected performance, the revenue sharing arrangement under which the application is allowed to operate over the network may be adjusted.

In some embodiments, the mobile application monitoring system generates a real-time or near real-time dashboard for an application provider. The dashboard allows the application provider to monitor the performance of the application over the network. The dashboard may present a textual or graphical representation of the variable reward table and where the application is currently operating in the variable reward table. By displaying an application's location in the variable reward table to the application provider, the provider is able to assess whether it is worthwhile to optimize the application in one or more ways in order to move to a different cell in the variable reward table and receive a greater revenue share for the application.

In some embodiments, the revenue share or other compensation value that the application provider agrees to share with the network operator in order for the application provider's application to run on the network is a baseline value. Modifications may be applied by the system to the baseline value to cause the revenue share or other compensation value to increase or decrease. Applications having certain application features or consequences that are generally considered to be favorable to the network operator or to application users may warrant an increase in the baseline value (criteria specifying such features or consequences being referred to herein as "inflators"). Applications having certain application features or consequences that are generally considered to be detrimental to the network operator or to application users may warrant a decrease in the baseline value (criteria specifying such features or consequences being referred to herein as "deflators"). Unlike the baseline value of revenue sharing that is based on application performance, such inflators or deflators typically relate to non-performance-related aspects of the application. For example, the system may apply an inflator causing an application provider's compensation to rise if the application provider abides by the network operator's best practices guidelines when designing an application user interface. As another example, the system may apply a deflator causing an application provider's compensation to fall if an application results in an undue number of inquiries from customers to the customer service group of the network operator. Inflators or deflators therefore act to encourage or discourage certain behavior by application designers based on application features or consequences that may not be directly determined by monitoring the performance of the application.

Various embodiments of the invention will now be described. The following description provides specific details for a thorough understanding and an enabling description of these embodiments. One skilled in the art will understand, however, that the invention may be practiced without many of these details. Additionally, some well-known structures or functions may not be shown or described in detail, so as to avoid unnecessarily obscuring the relevant description of the various embodiments. The terminology used in the description presented below is intended to be interpreted in its broadest reasonable manner, even though it is being used in conjunction with a detailed description of certain specific embodiments of the invention.

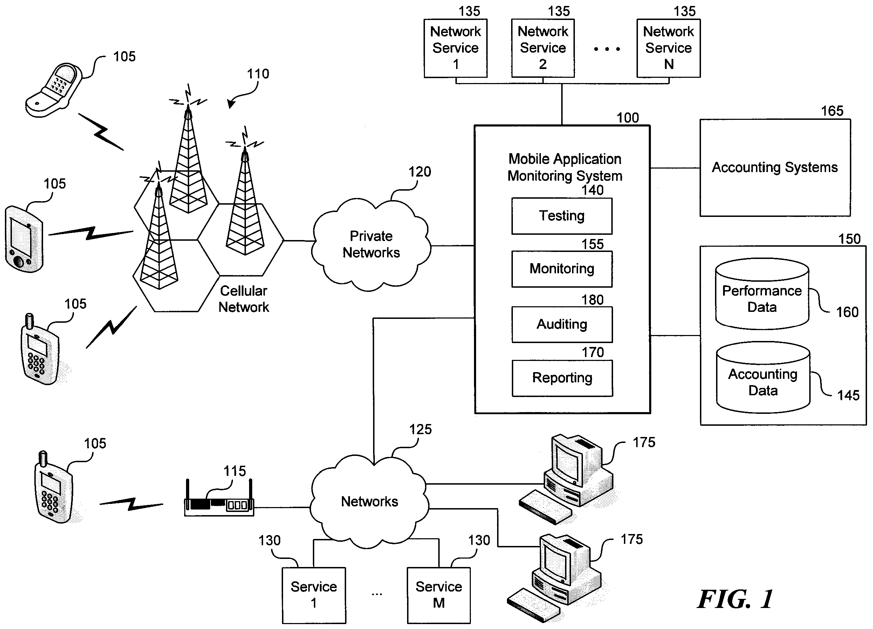

Figure 1 is a block diagram of an environment in which a mobile application monitoring system 100 operates. Mobile devices 105 are able to access telecommunication services offered by a network operator through a cellular network 110 or through one or more wireless access points 115 coupled to network operator systems (not shown) through private networks 120 or public/private networks 125, such as the Internet. The network operator may provide a broad range of telecommunication services to users of the mobile devices, such as voice services, access to the Internet, SMS messaging, purchase and delivery of ringtones, games, etc.

One or more third-party software applications may be added to mobile devices that operate over the operator network. Applications may be games, media or media sharing programs, mail or communication programs, educational, financial or productivity programs, mapping or location-based programs, or any other program, service or functionality that users may find valuable on a mobile device. The applications may be Java-based, flash-based, may operate in HTML and other browser environments, or may operate in any native environment that currently exists or will be developed for mobile devices in the future. During operation, the applications may rely upon one or more services 130 that are accessible through network 125. The services may be hosted by the application provider or by third-parties. For example, an application on a mobile device may rely on Google maps to implement a directions service. The applications may also rely on one or more value-added network services 135 that are hosted by the network operator. For example, the network operator may offer a service that provides the location of a mobile device, a service that provides demographic information about the mobile device user, a service that provides a user state or "presence" of the handset and the corresponding user, or a service that authenticates the identity of the user. The applications may also rely on one or more device services (not shown) that are present on the mobile device. For example, the application may access a proprietary interface that is provided by the network operator on the mobile device for purposes of delivering content in a uniform manner to a user. The services may be developed by the network operator or by the application provider or third-party and hosted by the network operator. The services are accessed by making appropriate calls to the services using an API (application program interface) defined by the network operator or third party. The software applications may combine the various services to implement new and beneficial functionality for consumers using the mobile devices.

Various fees may be imposed on consumers for access to and use of the applications on the mobile devices. A consumer may be charged a flat monthly fee for use of an application (e.g., $4/month), a per-use fee for use of an application's functionality (e.g., $0.50 for each set of directions to a location), a bundled fee for use of a group of applications (e.g., $200/year for a suite of programs), or any combination of charges. Alternatively or in addition to the fee, the cost of an application may be covered in part or in full by advertising. That is, the cost of the application may be borne by one or more advertisers that agree to pay for leads to consumers that are generated by the application. The incoming fees and/or advertising revenue associated with the application are collected by the network operator or the application provider and shared between the network operator and the application provider in a manner that will be described in additional detail here.

The mobile application monitoring system 100 monitors the performance of the third-party applications on mobile devices and determines a compensation arrangement under which revenue attributable to an application will be shared between the network operator and the application provider. As will be described in additional detail herein, the mobile application monitoring system 100 includes a number of modules to facilitate such monitoring and revenue sharing. A testing module 140 initially tests an application to assess the impact of the application on the network and device. While such testing module is shown as being integral with the mobile application monitoring system, the testing may be outsourced to another party. Based on the testing results, the mobile application monitoring system determines an appropriate revenue sharing arrangement for the application. As will be described in additional detail herein, the revenue sharing arrangement may be determined by a variable reward table that is stored in an accounting data set 145 within data storage area 150. If testing is unable to be completed, or if the results of the testing are inconclusive as to the impact of the application, the mobile application monitoring system may assign a default revenue sharing arrangement for the application. Such a default revenue sharing arrangement may be modified when actual performance information about the application becomes available.

The mobile application monitoring system also contains an auditing module 180 that is used to identify inflators and deflators and apply modifications to the revenue sharing arrangement in order to encourage or discourage certain behavior by application designers. While the testing module determines the anticipated performance of the application, the auditing module 180 is directed to non-performance-related aspects of the application that may have a positive or negative result on the network operator or on users of an application. As will be described in additional detail herein, on a periodic or aperiodic basis the system may audit an application in order to assess whether the application satisfies certain criteria that would warrant an increase in compensation to an application provider (such criteria having a positive effect and being referred to as "inflators") or whether the application satisfies certain criteria that would warrant a decrease in compensation to an application provider (such criteria having a negative effect and being referred to as "deflators").

When an application has been approved for distribution, the application may be installed by one or more users on mobile devices 105. During operation, the application may access one or more network services 135, one or more third-party services 130, or one or more device services present on the mobile device. A monitoring module 155 monitors the performance of a particular application across all users, including the amount of bandwidth consumed by the application and the number and type of requests made by the application to network, third-party, or device services. Monitoring may also include instantaneous, peak, average, and cumulative statistics of factors such as upstream or downstream bandwidth or the number of messages or other packets related to a particular application. Performance data about the performance of the application is stored by the monitoring module in a performance data set 160 within data storage area 150.

On a periodic or continuous basis, the monitoring module 155 determines whether the application is operating within the performance boundaries of the revenue sharing arrangement. The measured performance data is analyzed to determine whether the performance impact exceeds or falls short of the impact associated with the revenue sharing arrangement. As will be discussed in further detail herein, if the performance of an application materially exceeds or falls short of the predicted impact, the revenue sharing arrangement associated with the application may be adjusted accordingly.

In addition, on a periodic or aperiodic basis, the auditing module 180 may automatically audit non-performance-related aspects of the application, or may trigger a manual audit of the non-performance-related aspects of the application. The application is analyzed to identify inflators or deflators that are applicable to the application. Each identified inflator or deflator may have a corresponding impact on the revenue sharing arrangement associated with the application. The auditing component 180 totals the net impact on the sharing arrangement as a result of the identified inflators or deflators.

The mobile application monitoring system transmits the information necessary to share application revenue between the network operator and the application provider to the network operator's accounting systems 165. The accounting systems bill users for the use of the application. The accounting systems also determine how much compensation is to be paid to the application provider in accordance with the revenue sharing rules and application of inflators/deflators, and periodically remits the appropriate amount to the application provider. Those skilled in the art will appreciate that revenue can be paid to the application provider under a variety of arrangements. For example, the revenue may be paid based on the amount billed to users during the previous month, or revenue may be paid only after receipt of payment from users. In some embodiments, rather than the network operator collecting revenue associated with an application, the application provider may collect revenue directly from users. The application provider periodically remits the compensation that is to be paid to the network operator in accordance with the revenue sharing rules. In some embodiments, the revenue associated with an application may be in part or entirely derived from advertising or other sponsorship. The advertising may be collected by the network operator, the application provider, or third parties that distribute the application.

The mobile application monitoring system 100 also contains a reporting module 170 that analyzes and formats the performance and accounting data and enables the system operator or the application provider to review the performance of the application and any applicable inflators/deflators. As will be discussed in further detail herein, the reporting module 170 may present the data in a variety of formats to the application providers. The application providers may access the data over a network connection using remote computers 175.

Those skilled in the art will appreciate that the system 100 may be implemented on any computing system or device. Suitable computing systems or devices include server computers, multiprocessor systems, microprocessor-based systems, network devices, minicomputers, mainframe computers, distributed computing environments that include any of the foregoing, and the like. Such computing systems or devices may include one or more processors that execute software to perform the functions described herein. Processors include programmable general-purpose or special-purpose microprocessors, programmable controllers, application specific integrated circuits (ASICs), programmable logic devices (PLDs), or the like, or a combination of such devices. Software may be stored in memory, such as random access memory (RAM), read-only memory (ROM), flash memory, or the like, or a combination of such components. Software may also be stored in one or more storage devices, such as magnetic or optical based disks, flash memory devices, or any other type of non-volatile storage medium for storing data. Software may include one or more program modules which include routines, programs, objects, components, data structures, and so on that perform particular tasks or implement particular abstract data types. The functionality of the program modules may be combined or distributed as desired in various embodiments.

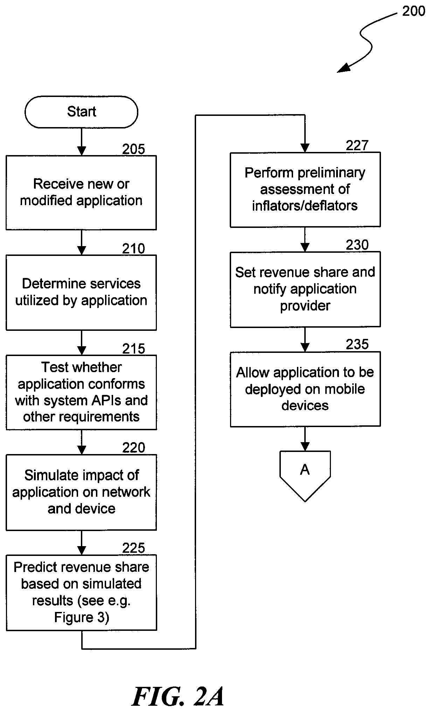

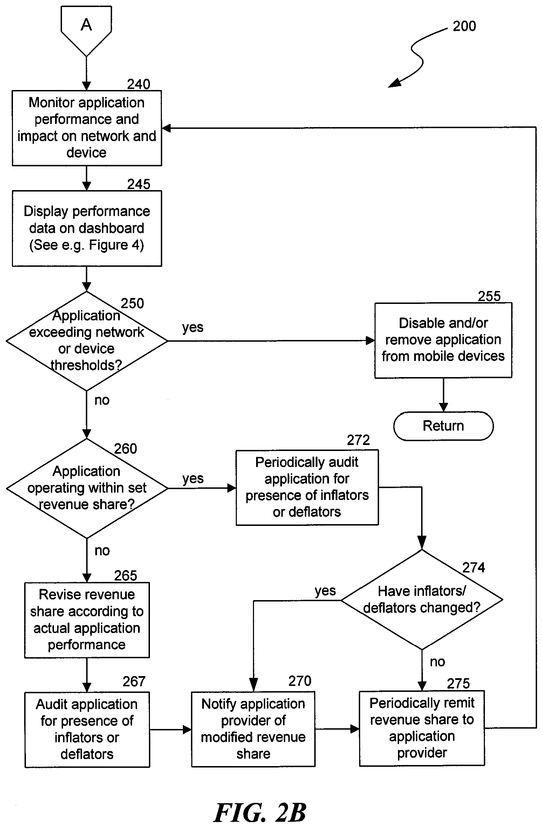

Figures 2A and 2B are flow charts of a testing, monitoring, auditing, and compensation process 200 implemented by the mobile application monitoring system. At a block 205, the system receives a new or modified (e.g., a newly-released version) application from an application provider. Such application may be submitted electronically by the application provider and may be automatically queued for processing by the mobile application monitoring system.

At a block 210, the system determines what network services 135 or device services are utilized by the application. The network operator may charge different amounts to the application provider depending on the services that as used by the application. The greater the value that the service delivers to the application, or the more resources that are required to deliver the service by the network provider, the greater amount that the application developer would be charged to utilize the service. Examples of services that might be utilized by applications include:
- Location Information - The location of the mobile device, either generally (e.g., within a certain city or state) or specifically based on GPS, triangulation, or other location technology.
- Presence Information - The current state of another user, e.g., an indication that another user is currently on a voice call or in a meeting based on calendar information contained on the other user's mobile device.
- Demographic Information - Demographic information about the user or other users of mobile devices.
- Data Storage - File transfer, storage, or processing that the network operator may provide.
- User Interfaces - Certain user interfaces may be provided by the network operator for use in the application. For example, the network operator may have a unique menu structure that uses avatars of customers. The network operator may provide and update avatars to application providers so that the avatars may be incorporated into the application interface.

At a block 215 the system tests the application in order to determine whether the application conforms to network APIs and other requirements. For example, if the application makes services calls to one or more network services 135 offered by the system, the system may verify that the service calls transmit the appropriate data in accordance with network service APIs. The system may also verify that the application operates in a transparent manner that allows the application to be monitored by the system.

At a block 220, the system simulates the impact of the application on the network and on a mobile device. The application impact on the network may take a variety of forms, but may include such factors as:
- Bandwidth Consumption - The use of bandwidth by the application, measured either by peak use (i.e., megabits per second) or cumulative use (megabits/month/user).
- Network Services - The number of times and frequency that network services 135 are accessed by the application.
- Network Access Points - The number and type of network access points that are utilized by the application.

Other impacts on the network that can't easily be estimated will be discussed in further detail below. The application impact on a mobile device may take a variety of forms, but may include such factors as:
- Battery Life - The effect that the application has on the battery life of a device. For example, an application may keep the backlight on a device display on for an extended period, thereby draining the battery and impacting customer satisfaction.
- Memory Footprint - The amount of device memory that is consumed by the application, whether at installation or at run-time. Too large of a memory footprint may negatively impact device performance.
- Concurrent Processes - The number of concurrent CPU processes that are initiated on the mobile device, thereby impacting the ability of the device to run background processes.

At a block 225, the system sets the initial revenue share that determines how application revenue will be shared between the network operator and the application provider when the application operates over the network. As previously described, the network operator or application provider will typically charge the consumer a fee for access to a particular application. The fee charged to a consumer may be determined by the application provider, by the network operator, by a third-party distributor/aggregator, or by a combination of one or more of the aforementioned or other parties. The consumer may be charged a recurring fee (e.g., a monthly or yearly fee), a one-time flat fee, no fee provided that the consumer agrees to receive advertising (i.e., advertising revenue is collected and a portion delivered to the network operator), or a variable amount under a fee arrangement. A portion of the revenue received by the network operator is shared with the application provider.

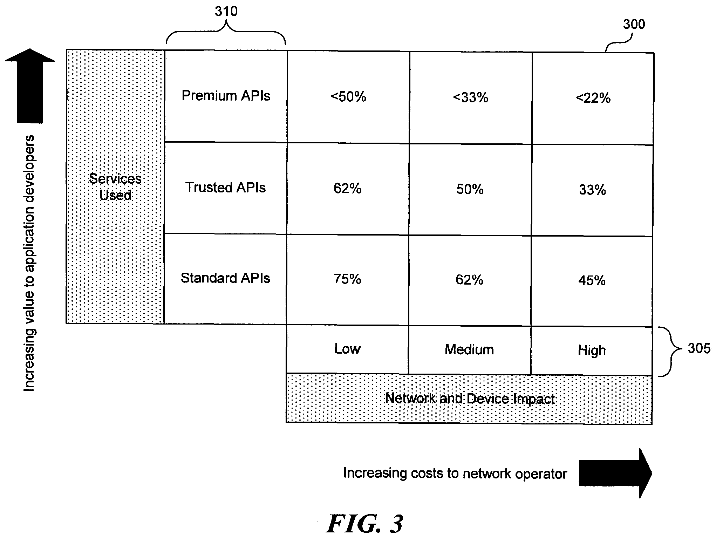

Figure 3 is a variable reward table 300 that depicts an example of the amount of revenue that may be shared with an application provider based on the operational characteristics of an application. An application is classified, and a revenue share thereby determined, by assigning the application to one of the cells within the table. The x-axis 305 of the variable reward table represents a blended measure of the network and device impact that is generated by the application. While three ranges are depicted in the table ("low," "medium," and "high"), it will be appreciated that a greater or lesser number of ranges may be utilized by the system. In general, the greater the impact that the application has on the network and/or device, the less revenue is shared by the application provider. For example, looking at the first row corresponding to "standard APIs," the application provider will share in 75% of the received revenue if its application has a low impact on the network and/or device, 62% of the revenue if its application has a medium impact on the network and/or device, and only 45% of the revenue if its application has a high impact on the network and/or device. It will be appreciated that the revenue share may drop off more quickly (i.e., in a non-linear fashion) the greater the impact the application has on the network and/or device in order to encourage application providers to minimize the impact that their application on the network operator and consumers. By using network and device resources wisely, the application provider will profit more from its application.

The y-axis 310 of the variable rewards table reflects the complexity and/or value of the services used by the application. Three ranges are provided in the table: "standard APIs" which are simple, low-cost, or low value services; "trusted APIs" which are services of medium complexity, cost or value; and "premium APIs" which are services of high complexity, cost, or value. For example, a standard API may refer to a service that draws to the mobile device screen and intercepts button requests when the application is in the foreground, a trusted API may refer to a service that returns an age and gender of the user based on stored demographic information, and a premium API may refer to a service that returns a mobile device location based on GPS positioning technology. The more complex or valuable the service, the greater the amount the network operator may charge to access the service. In general, therefore, the greater the complexity or value of the utilized service, the less revenue share the application developer will receive for its application. As an example, if an application operates in the first column corresponding to a "low" network and device impact, the application provider will receive 75% of the revenue if its application uses standard APIs, 62% if its application uses trusted APIs, and <50% of the revenue if its application uses premium APIs. The premium API value is specified as a range since the cost of such services may be sufficiently large enough for the network operator and application provider to negotiate the actual revenue share for applications falling in that category.

It will be appreciated that an application may often use two or more services during operation. When two or more services are used, a blended level of complexity or value may be calculated in order to assign the appropriate revenue share to the application. Alternatively, the highest level of complexity or value may be used to assign the appropriate revenue share. Other algorithms to determine the level of complexity of services may also be used. Also, while three ranges of complexity are depicted, it will be appreciated that a greater or lesser number of ranges may be used in the variable reward table. Those skilled in the art will appreciate that the percentages depicted in the variable rewards table are merely representative, and all the cells in the table or each cell in the table may represent a different model under which revenue is shared. For example, a cell may represent a fixed cost paid to the network operator (e.g., $1/month), a revenue sharing arrangement (e.g., 75% of collected revenue), a variable amount depending on the number of applications (e.g., $1/month for the first 10,000 applications, $0.90 for the next 100,000 applications, etc.), or any other model or combination of models (e.g., $0.25/month plus 50% of collected revenue, $0.50/months plus 25% of advertising revenue). All cells in the variable rewards table may use the same model, groups of cells may use the same model, or each cell may use a different model.

In some embodiments, the revenue share will decrease more quickly as the classification of an application moves to the right in the variable reward table 300 (i.e., as the application has a greater network/device impact) as compared with the rate of decrease as the application moves upward in the table (i.e., as the application uses resources of greater sophistication or higher value). The difference in revenue share change is to encourage application developers to use more sophisticated and valuable services in order to benefit consumers, while at the same time strongly discouraging the application providers from having too great an impact on the network and/or device. For example, an application developer creating an application using only standard APIs and having low network/device impact will receive a 75% share of revenue from that application, while an application developer creating an application using premium APIs and having a high network/device impact will receive less than a 22% share of revenue from that application. If the network operator therefore receives $4/month from a user, the application developer receives $3/month under the first scenario yet only $0.88/month under the second scenario. The use of the variable reward table therefore strongly encourages good design behavior from application developers.

In some embodiments, the percentages that dictate the revenue sharing arrangement may be subject to minimums that scale with network use. For example, even if there is an agreement to share 75% of revenue with a partner, the application provider may still be charged a minimum amount that is dictated by the network use. Employing a minimum amount ensures that the network operator is guaranteed similar profitability regardless of the level of network usage by the application.

Returning to Figure 2A, at a block 227 the system makes a preliminary assessment of any inflators or deflators that are relevant to the application. Inflators or deflators are non-performance-related criteria pertaining to aspects of an application that may have a positive or negative result on the business of the network operator or on users of the application. Some examples of inflators or deflators include, but are not limited to:
- Customer Care Resources -- The call volume from mobile device users to customer care based on the application, or other load placed on self-help systems.
- Refund Rates -- The number of refunds that an application triggers per unit of time or per volume of sales or trial.
- User Self-Help Tools - The presence or absence of effective user self help tools for application functionality (e.g., user tools to report objectionable content on a content-sharing application).
- User Interface Guidelines - The conformance or non-conformance of the application user interface with network operator guidelines (e.g., uniform Ul elements to ensure a consistent user experience across applications).
- Platform Portability - The development by the application designer of multiple versions of an application for use on different mobile devices.
Many of the inflators or deflators may have a temporal component that factors into how they are applied to an application. For example, an application may be allowed a higher number of customer care resources immediately after it is deployed, but over time the amount of customer care resources utilized must become progressively lower or a deflator is applied. Similarly, an application may only be required to be available on a single mobile device platform on launch, but may be penalized over time by the application of a deflator if the number of device platforms does not expand over time. In some cases, the criteria measured by inflators or deflators cannot be simulated before the deployment of an application. As a result, the preliminary assessment at block 227 may be only a partial analysis of the total number of inflators or deflators that may ultimately be relevant to an application.

Each inflator or deflator has a corresponding impact on the revenue sharing arrangement associated with the application. The impact may be a percentage change (e.g., the revenue sharing arrangement may increase 1% in favor of the application designer for each inflator) or may be a fixed change (e.g., the application designer may receive an additional $100 per month for each inflator as long as other minimums are met). The impact may vary based on the number of inflators or deflators that are satisfied (e.g., one deflator may cause a 1% deduction, two deflators a 3% deduction, and three deflators a 5% deduction). And certain combinations of inflators and deflators may caused enhanced impact (e.g., the presence of two particular inflators may cause an increase that is greater than the individual increase dictated by the inflators individually). In some embodiments, too many deflators may cause payment to be withheld to an application provider until the application is brought into better conformance with the requirements of the system operator. The system therefore totals the net impact on the sharing arrangement as a result of the identified inflators or deflators.

At block 230 the system sets the revenue share based on the simulation results and on the preliminary assessment of the inflators/deflators. The system notifies the application provider of the preliminary revenue share, such as via email or via a dashboard as described herein. If the application provider is not satisfied with the proposed revenue share, the application provider may attempt to re-engineer its application to improve the application's performance. Alternatively, the application provider may withdraw its application from being considered for release on the network. In some circumstances, the impact of the deflators may temporarily or permanently outweigh the sum of the baseline and the inflators. In such circumstances, the application provider may need to compensate the network operator for the distribution of the application over the network.

At a block 235, if the application provider agrees to the set revenue share, the application is released on the network operator's network and allowed to be downloaded, installed, and run on mobile devices. As part of the deployment process, the network operator will typically ensure that it tracks installations of the application. Such tracking may be accomplished by building a dataset that correlates unique application identification numbers with mobile device identifiers. The network operator may also require the application provider to build functionality into the application to allow the application to be immediately disabled should adverse network problems ever start to arise as a result of the application.

At a block 240, the system monitors the application performance and impact on both the network and on the device. Monitoring may occur in a variety of different ways, such as requiring the application to route all messages or service calls through the system so that the system may observe the network traffic associated with the application. The mobile device may also periodically submit status reports to the system, providing an aggregate picture of the health of all applications operating on the mobile device. Other ways of monitoring the application include installing a software program on the mobile device that reports message and data traffic on an application-by-application basis, installing and utilizing network monitoring hardware that is application aware, and/or logging requests for services on a per-application basis. The system may monitor applications on a continuous, periodic, or sporadic basis depending on the type of the application and the expected performance of the application. For example, an application classified as "high" impact using "premium APIs" as depicted in the variable reward table may be monitored more frequently and closely than an application classified as "low" impact using "standard APIs." Moreover, the frequency of monitoring may decrease the longer an application has existed on mobile devices. For example, at a certain point monitoring may cease for well-established applications.

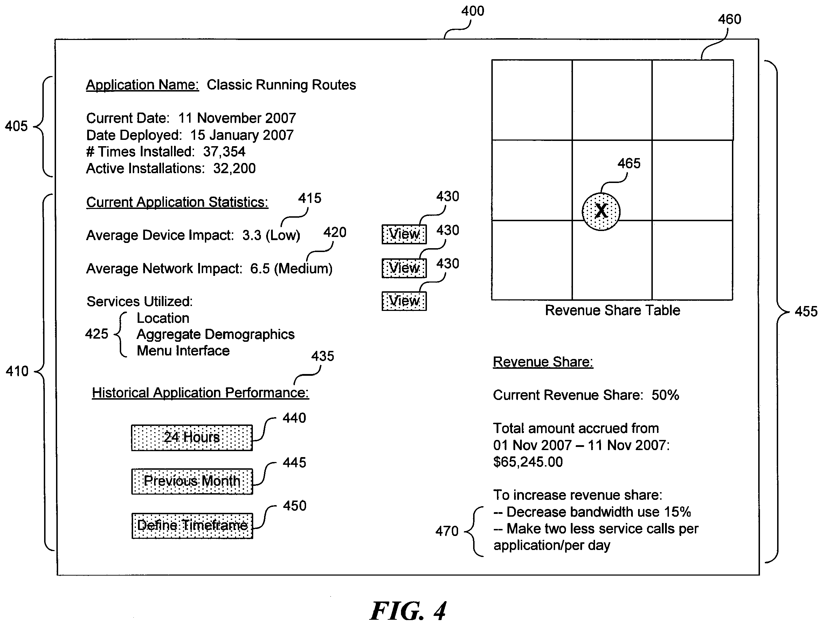

At a block 245, the system displays the performance data in a form that allows the application provider to view the performance of the application. A representative dashboard 400 to allow the application provider to view performance data associated with a particular application is depicted in Figure 4. The dashboard 400 includes three regions that provide different types of data about the application. A first region 405 includes various details about the application deployment on mobile devices. For example, the first region includes the name of the application, the current date, the date the application was first deployed, and the number of installed and active copies of the application. Various other details about the deployment, such as the current version number or rate of application installation may also be provided by the system.

A second region 410 of the dashboard 400 includes various statistics about the operation of the application. In an "average device impact" field 415, the system provides a numerical assessment (e.g., on a scale of 1 to 10 where "1" is good and "10" is bad) of the impact of the application on the mobile device. The number may be derived by weighting the various device impacts that were previously described herein. In an "average network impact" field 420, the system provides a numerical assessment of the impact of the application on the network. Again, the number may be derived by weighting the previously-described network impacts. In a "services utilized" list 425, the system may list the various services that are utilized by the application. Clicking on each service may take the user to an additional screen providing information about that service. A "view" button 430 is provided next to fields 420, 425, and list 430. When a user selects the view button, the system may generate a more detailed report (not shown) that lists the data behind the associated rating or list. The greater detail provided by the report may allow the application provider to better assess the performance of an application and determine how to improve the performance in a manner that increases the revenue share of the application. The second region of the dashboard 400 also includes a "historical application performance" section 435. The system populates the historical performance section with a number of buttons that allow the application provider to view the past performance of an application. For example, the system includes a "24 hours" button 440 to allow the application provider to view performance data over the last 24 hours, a "last month" button 445 to allow the application provider to view the performance data over the last 30 days, and a "define timeframe" button 450 to allow the application to view performance data over a specified date range. The historical performance section 435 may be particularly valuable to an application provider that periodically releases new versions of applications in order to allow the application provider to compare and troubleshoot changes in performance that occur between versions.

A third region 455 of the dashboard 400 is generated by the system to convey revenue share information about the application to the application provider. At the top of the third region, a variable reward table 460 is replicated for the application provider. The reward table may or may not display the actual revenue share numbers in the table. The reward table does display, however, a graphical indication 465 of where the application has been classified and is currently operating within the table. The graphical indication, in this case an "X" in the table, allows the application provider to quickly see where there application is placed with respect to other table cells that would provide a higher revenue share. For example, in the depicted table in Figure 4, the "X" is located very close to the boundary with the lowest row in the table. Since moving to the lowest row would increase the revenue share of the application, the application provider may elect to reengineer the application's use of services in an attempt to move the application lower in the table. The application provider might attempt to reengineer the use of services before reengineering to improve the network or device impact, because the graphical proximity of the "X" to the lowest row in the table indicates that it may be easier to achieve classification into the lowest row rather than classification into the farthest left (i.e., lower) column.

Located in the third region 455 beneath the variable reward table 460 is further information about the revenue share associated with the application. The system may provide the current revenue share associated with the application, as well as an accounting of the accrued revenue that is to be shared under the agreement between the application provider and the network operator. The system may also provide one or more recommendations 470 to the application provider about ways to improve the performance of the application and derive a larger revenue share. While the application provider may be able to derive such improvement from the other information that is presented to it, the system facilitates the process by providing the most efficient changes that it determines based on the variable reward table.

While certain performance data is provided in the dashboard 400, those skilled in the art will appreciate that a greater or lesser amount of data may be provided to the application provider. For example, the presence or absence of inflators or deflators for a particular application, as well as the impact of the inflators or deflators in isolation or in aggregate, may be provided on the dashboard 400. One advantage of the dashboard is that it is a self-service interface that encourages the application provider to monitor its application and improve the application in a manner that is beneficial to the network operator. In some embodiments, however, the dashboard may be omitted by the system and the information provided to the application provider in another form, such as periodic audit reports, email reporting, etc. The performance data may be provided on a real-time, periodic, or sporadic basis to the application provider.

Returning to Figure 2B, at a decision block 250 the system determines whether a deployed application is exceeding one or more network or device thresholds. In certain cases, an application may malfunction or may begin to perform materially outside the simulated impact on the device and network or outside of the typical actual measured impact on the device and network. When an application exceeds normal operational fluctuations and begins to materially impact network operations or the mobile device user experience, the system may elect to terminate the application. At a block 255, the system will therefore halt, disable, and/or remove the application from mobile devices when the predetermined thresholds have been exceeded. The testing, monitoring, and revenue sharing process 200 then halts with respect to the particular application until appropriate modifications can be made to the application to remedy the unexpected behavior.

If the application is operating within normal performance boundaries, processing continues to decision block 260. At decision block 260 the system determines whether the application is continuing to operate within the parameters associated with the previously-classified revenue share. The revenue share associated with an application may change for a variety of reasons. For example, the application is initially classified by simulating the performance of the application. When the application is actually deployed to mobile devices, the application may behave in a different manner than when simulated. If so, the application should be re-classified in the variable reward table based on the actual performance. Such a reclassification may be up or down, of course, depending on whether the application performs better or worse than simulated. As yet another example, when deployed in mobile devices the mobile device users may use the application in a much different fashion than originally anticipated. Although the application may therefore be operating as expected, the unanticipated use of the application may significantly impact the network or device. As a result, the classification of the application may need to be altered. Note that a classification change may only be warranted based on a continued change in application behavior. Certain transient changes in application performance may be ignored if they are short in length and if it is difficult to assess a root cause.

If the classification of the application needs to be altered, at a block 265 the system re-classifies the application within the variable reward table and thereby revises the revenue share that is to be received by the application provider. At a block 267, the system makes an assessment of any inflators or deflators that are relevant to the application. As previously described, some inflators or deflators cannot be accurately assessed until an application has been deployed and utilized by a number of users. In addition, the number of inflators and deflators that are relevant to an application may change over time as an application provider modifies its application or as the requirements of certain inflators and deflators becomes more stringent or more lenient. As a result, when revising the revenue share based on actual application performance, the system may audit the application to add, delete, or modify the number and effect of the inflators or deflators relevant to the application. Such a change may cause the revenue share to change in accordance with the various rules described herein and associated with the identified inflators and deflators. In some circumstances, the performance of the application may be sufficiently poor as to cause the system to immediately suspend the use of the application on the network until the application can be re-engineered.

At a block 270 the application provider is notified of the modified revenue share and may be given an explanation of the factors behind the change to the revenue share, including the results of any inflators or deflators. As a result of the modification, the application provider may choose to accept the revised amount, may choose to re-engineer the application in order to achieve the previous revenue share numbers, or may choose to remove their application from the mobile devices. In some circumstances, the modified revenue share may be immediately applied to revenue associated with an application. In some circumstances, the application provider may be notified of the modified revenue share but provided a grace period before the modified revenue share is applied. The grace period allows the application provider an opportunity to make modifications to the application in order to avoid having the modified revenue share take effect. If modifications made by the application provider are sufficient to overcome the application impact causing the modified revenue share to be applied, the system may not apply the modified revenue share.

At a block 275 the system accounts for any revenue that is owed to the application provider and stores appropriate data in the accounting data set 145. On a continuous or periodic basis, the accounting data is provided to the accounting system 165 in order to effectuate payment to the application provider. Processing then continues to block 240 where the system continues to monitor the performance of the application.

If at decision block 260 the system determines that the application is continuing to operate within the parameters associated with the previously-classified revenue share, processing continues to a block 272. At block 272, the system may implement a periodic audit to add, delete, or modify the number and effect of the inflators or deflators relevant to the application. Such a change may cause the revenue share to change in accordance with the various rules described herein. At a decision block 274, the system determines whether the inflators and deflators that are relevant to an application have changed. If the inflators and deflators have not changed, processing continues to a block 275 where the system accounts for any revenue that is owed to the application provider and stores appropriate data in the accounting data set 145. If the inflators or deflators have changed, processing continues to a block 270 where the system notifies the application provider of the modified revenue share and provides an explanation of the inflators or deflators that resulted in the change to the revenue share. Processing then continues to a block 275 where the system accounts for any revenue that is owed to the application provider and stores appropriate data in the accounting data set 145

While the process described in Figures 2A and 2B is directed to monitoring the performance of a single application, those skilled in the art will appreciated that the system may implement the process 200 to test, monitor, and compensate for any number of applications that are deployed on the network operator's network. Various enhancements or improvements may be made when scaling the process 200 to accommodate a large number of applications. In addition, whereas the system has been primarily described as applied to applications available on a mobile device, it will be appreciated that the system is equally applicable to websites that offer services to mobile devices across the network operator's wireless network. That is, the performance of the website and the presence of any inflators and deflators associated with that website may impact a revenue sharing arrangement for services that are available for a fee through the website.

From the foregoing, it will be appreciated that specific embodiments of the invention have been described herein for purposes of illustration, but that various modifications may be made without deviating from the scope of the invention. Accordingly, the invention is not limited except as by the appended claims.

## Claims

1. A system for sharing revenue between an application provider associated with an application that operates on a mobile device and a network operator that operates a wireless telecommunications network that is utilized by the mobile device, the system comprising:
a monitoring module configured to monitor the operation of an application that is created by an application provider and resides on a mobile device, the mobile device utilizing a wireless telecommunications network operated by a network operator, the monitoring module:
measuring an impact on the wireless network by the operation of the application,
assessing the operation of the application to identify one or more services utilized during the operation of the application, and
determining a revenue sharing arrangement between the application provider and the network operator for operation of the application on mobile devices, wherein the revenue sharing arrangement is based on the measured impact of the application on the wireless network and the identified services utilized during the operation of the application;
an audit module configured to:
assess the application and identify non-performance-related features or consequences of the application that impact the network operator or a user of the application on a mobile device; and
modify the revenue sharing arrangement in accordance with the identified non-performance-related features or consequences; and
a module configured to direct a distribution of revenue associated with the application to the application provider and the network provider in accordance with the modified revenue sharing arrangement; and
an interface module configured to generate an interface for the application provider to view the measured impact of the application on the wireless network and to provide one or more recommendations to the application provider about ways to improve the performance of the application and derive a larger revenue share.

2. The system of claim 1, wherein the audit module increases the revenue distributed to the application provider if the non-performance-related features or consequences are favorable to the network operator or favorable to the user of the application on the mobile device.

3. The system of claim 1, wherein the audit module decreases the revenue distributed to the application provider if the non-performance-related features or consequences are detrimental to the network operator or detrimental to the user of the application on the mobile device.

4. The system of claim 1, wherein a non-performance-related consequence is an amount of customer care resources utilized by the application, a refund rate associated with the application, an effectiveness of user self-help tools associated with the application, a conformance of the application with user interface guidelines dictated by the network operator, or an availability of the application for mobile devices of different manufacture.

5. The system of claim 1, wherein the revenue associated with the application includes advertising revenue.

6. A method of charging an application provider to allow an application to operate on mobile devices and utilize a wireless telecommunications network operated by a network operator, the method comprising:
monitoring the operation of an application created by an application provider and residing on a mobile device to measure an impact on the wireless network by the operation of the application;
assessing the operation of the application to identify one or more services utilized during the operation of the application;
determining a cost to be paid by the application provider for operation of the application on mobile devices, wherein the determined cost is based on the measured impact of the application on the wireless network and the identified services utilized during the operation of the application;
assessing the application to identify non-performance-related features or consequences of the application that impact the network operator or a user of the application on a mobile device;
modifying the determined cost in accordance with the identified non-performance-related features or consequences; and
charging the application provider in accordance with the modified cost;
wherein the method further comprises generating an interface for the application provider to view the measured impact of the application on the wireless network and to provide one or more recommendations to the application provider about ways to improve the performance of the application and decrease the cost to be paid.

7. The method of claim 6, wherein the determined cost is decreased if the non-performance-related features or consequences are favorable to the network operator or favorable to the user of the application on the mobile device.

8. The method of claim 6, wherein the determined cost is increased if the non-performance-related features or consequences are detrimental to the network operator or detrimental to the user of the application on the mobile device..

9. The method of claim 6, wherein a non-performance-related consequence is an amount of customer care resources utilized by the application, a refund rate associated with the application, an effectiveness of user self-help tools associated with the application, a conformance of the application with user interface guidelines dictated by the network operator, or an availability of the application for mobile devices of different manufacture.

## Patentansprüche

1. System zum Aufteilen von Einnahmen zwischen einem Anwendungsanbieter, der zu einer Anwendung gehört, die auf einer mobilen Vorrichtung betrieben wird, und einem Netzwerkbetreiber, der ein drahtloses Telekommunikationsnetzwerk betreibt, das von der mobilen Vorrichtung genutzt wird, wobei das Verfahren umfasst:
ein Überwachungsmodul, das dazu konfiguriert ist, den Betrieb einer Anwendung zu überwachen, die von einem Anwendungsanbieter erstellt wird und sich auf einer mobilen Vorrichtung befindet, wobei die mobile Vorrichtung ein drahtloses Telekommunikationsnetzwerk nutzt, das von einem Netzwerkbetreiber betrieben wird, wobei das Überwachungsmodul zu Folgendem dient:
Messen einer Auswirkung auf das drahtlose Netzwerk durch den Betrieb der Anwendung,
Bewerten des Betriebs der Anwendung, um einen oder mehrere Dienste zu identifizieren, die während des Betriebes der Anwendung genutzt werden, und
Bestimmen einer Einnahmenaufteilungsanordnung zwischen dem Anwendungsanbieter und dem Netzwerkbetreiber für den Betrieb der Anwendung auf mobilen Vorrichtungen, wobei die Einnahmenaufteilungsanordnung auf der gemessenen Auswirkung der Anwendung auf das drahtlose Netzwerk und den identifizierten Diensten basiert, die während des Betriebs der Anwendung genutzt werden;
ein Prüfungsmodul das zu Folgendem konfiguriert ist:
Bewerten der Anwendung und Identifizieren von nicht leistungsbezogenen Merkmalen oder Konsequenzen der Anwendung, die sich auf den Netzwerkbetreiber oder einen Nutzer der Anwendung auf einer mobilen Vorrichtung auswirken; und
Modifizieren der Einnahmenaufteilungsanordnung entsprechend den identifizierten nicht leistungsbezogenen Merkmalen oder Konsequenzen; und
ein Modul, das dazu konfiguriert ist, eine Verteilung der Einnahmen, die der Anwendung zugeordnet sind, auf den Anwendungsanbieter und den Netzwerkbetreiber entsprechend der modifizierten Einnahmenaufteilungsanordnung zu leiten; und
ein Schnittstellenmodul, das dazu konfiguriert ist, eine Schnittstelle für den Anwendungsanbieter zum Anzeigen der gemessenen Auswirkung der Anwendung auf das drahtlose Netzwerk zu erzeugen und eine oder mehrere Empfehlungen für den Anwendungsanbieter über Möglichkeiten bereitzustellen, wie die Leistung der Anwendung verbessert und ein größerer Einnahmenanteil erzielt werden kann.

2. System nach Anspruch 1, wobei das Prüfungsmodul die an den Anwendungsanbieter verteilten Einnahmen erhöht, wenn die nicht leistungsbezogenen Merkmale oder Konsequenzen günstig für den Netzwerkbetreiber oder günstig für den Benutzer der Anwendung auf der mobilen Vorrichtung sind.

3. System nach Anspruch 1, wobei das Prüfungsmodul die an den Anwendungsanbieter verteilten Einnahmen verringert, wenn die nicht leistungsbezogenen Merkmale oder Konsequenzen nachteilig für den Netzwerkbetreiber oder nachteilig für den Benutzer der Anwendung auf der mobilen Vorrichtung sind.

4. System nach Anspruch 1, wobei eine nicht leistungsbezogene Konsequenz die Menge der Kundendienstressourcen ist, die von der Anwendung verwendet werden, ein Erstattungssatz, der der Anwendung zugeordnet ist, eine Effizienz von Selbsthilfewerkzeugen für den Benutzer im Zusammenhang mit der Anwendung, eine Konformität der Anwendung mit den Schnittstellenrichtlinien, die von dem Netzwerkbetreiber vorgegeben werden, oder eine Verfügbarkeit der Anwendung für mobile Vorrichtungen eines anderen Herstellers.

5. System nach Anspruch 1, wobei die Einnahmen im Zusammenhang mit der Anwendung Werbeeinnahmen beinhalten.

6. Verfahren zur Gebührenerhebung von einen Anwendungsanbieter dafür, den Betrieb einer Anwendung auf mobilen Vorrichtungen zuzulassen und ein drahtloses Telekommunikationsnetzwerk zu nutzen, das von einem Netzwerkbetreiber betrieben wird, wobei das Verfahren umfasst:
Überwachen des Betriebs einer Anwendung, die von einem Anwendungsanbieter erstellt wird und sich auf einer mobilen Vorrichtung befindet, um eine Auswirkung auf das drahtlose Netzwerk durch den Betrieb der Anwendung zu messen;
Bewerten des Betriebs der Anwendung, um einen oder mehrere Dienste zu identifizieren, die während des Betriebes der Anwendung genutzt werden;
Bestimmen von Kosten, die von dem Anwendungsanbieter für den Betrieb der Anwendung auf mobilen Vorrichtungen zu zahlen sind, wobei die bestimmten Kosten auf der gemessenen Auswirkung der Anwendung auf das drahtlose Netzwerk und den identifizierten Diensten basiert, die während des Betriebs der Anwendung genutzt werden;
Bewerten der Anwendung, um nicht leistungsbezogene Merkmalen oder Konsequenzen der Anwendung zu identifizieren, die sich auf den Netzwerkbetreiber oder einen Nutzer der Anwendung auf einer mobilen Vorrichtung auswirken;
Modifizieren der bestimmten Kosten entsprechend den identifizierten nicht leistungsbezogenen Merkmalen oder Konsequenzen; und
Erheben von Gebühren an den Anwendungsanbieter entsprechend den modifizierten Kosten;
wobei das Verfahren des Weiteren das Erzeugen einer Schnittstelle für den Anwendungsanbieter zum Anzeigen der gemessenen Auswirkung der Anwendung auf das drahtlose Netzwerk umfasst und das Bereitstellen von einer oder mehreren Empfehlungen für den Anwendungsanbieter über Möglichkeiten, wie die Leistung der Anwendung verbessert werden kann und die zu zahlenden Kosten gesenkt werden können.

7. Verfahren nach Anspruch 6, wobei sich die bestimmten Kosten verringern, wenn die nicht leistungsbezogenen Merkmale oder Konsequenzen günstig für den Netzwerkbetreiber oder günstig für den Benutzer der Anwendung auf der mobilen Vorrichtung sind.

8. Verfahren nach Anspruch 6, wobei sich die bestimmten Kosten erhöhen, wenn die nicht leistungsbezogenen Merkmale oder Konsequenzen nachteilig für den Netzwerkbetreiber oder nachteilig für den Benutzer der Anwendung auf der mobilen Vorrichtung sind.

9. Verfahren nach Anspruch 6, wobei eine nicht leistungsbezogene Konsequenz die Menge der Kundendienstressourcen ist, die von der Anwendung verwendet werden, ein Erstattungssatz, der der Anwendung zugeordnet ist, eine Effizienz von Selbsthilfewerkzeugen für den Benutzer im Zusammenhang mit der Anwendung, eine Konformität der Anwendung mit den Schnittstellenrichtlinien, die von dem Netzwerkbetreiber vorgegeben werden, oder eine Verfügbarkeit der Anwendung für mobile Vorrichtungen eines anderen Herstellers.

## Revendications

1. Système de partage de revenus entre un fournisseur d'applications associé à une application qui fonctionne sur un dispositif mobile et un opérateur de réseau qui exploite un réseau de télécommunications sans fil utilisé par le dispositif mobile, le système comprenant:
un module de surveillance configuré pour surveiller le fonctionnement d'une application qui est créée par un fournisseur d'applications et réside sur un dispositif mobile, le dispositif mobile utilisant un réseau de télécommunications sans fil exploité par un opérateur de réseau, le module de surveillance:
mesurant un impact sur le réseau sans fil par le fonctionnement de l'application,
évaluant le fonctionnement de l'application pour identifier un ou plusieurs services utilisés pendant le fonctionnement de l'application, et
déterminant un arrangement de partage de revenus entre le fournisseur d'application et l'opérateur de réseau pour le fonctionnement de l'application sur des dispositifs mobiles, dans lequel l'agencement de partage de revenus est fondé sur l'impact mesuré de l'application sur le réseau sans fil et les services identifiés utilisés pendant le fonctionnement de l'application;
un module d'audit configuré pour:
évaluer l'application et identifier les caractéristiques ou conséquences non liées aux performances de l'application ayant un impact sur l'opérateur de réseau ou un utilisateur de l'application sur un appareil mobile; et
modifier l'agencement de partage des revenus en fonction des caractéristiques ou des conséquences identifiées non liées aux performances; et
un module configuré pour diriger une distribution de revenus associée à l'application vers le fournisseur d'application et le fournisseur de réseau conformément à l'agencement de partage de revenus modifié; et
un module d'interface configuré pour générer une interface permettant au fournisseur d'applications de visualiser l'impact mesuré de l'application sur le réseau sans fil et de remettre au fournisseur d'application une ou plusieurs recommandations sur les moyens d'améliorer les performances de l'application et d'en tirer une plus grande part de revenus.

2. Système selon la revendication 1, dans lequel le module d'audit augmente les revenus distribués au fournisseur d'applications si les caractéristiques ou conséquences non liées aux performances sont favorables à l'opérateur de réseau ou favorables à l'utilisateur de l'application sur le dispositif mobile.

3. Système selon la revendication 1, dans lequel le module d'audit baisse les revenus distribués au fournisseur d'applications si les caractéristiques ou conséquences non liées aux performances sont préjudiciables à l'opérateur de réseau ou préjudiciables à l'utilisateur de l'application sur le dispositif mobile.

4. Système selon la revendication 1, dans lequel une conséquence non liée aux performances est une quantité de ressources d'assistance client utilisée par l'application, un taux de remboursement associé à l'application, une efficacité des outils d'auto-assistance de l'utilisateur associés à l'application, une conformité de l'application avec des directives d'interface utilisateur dictées par l'opérateur de réseau ou une disponibilité de l'application pour des dispositifs mobiles de fabrication différente.

5. Système selon la revendication 1, dans lequel les revenus associés à l'application comprennent des revenus publicitaires.

6. Procédé de facturation d'un fournisseur d'applications pour permettre à une application de fonctionner sur des dispositifs mobiles et utiliser un réseau de télécommunications sans fil exploité par un opérateur de réseau, le procédé consistant à:
surveiller le fonctionnement d'une application créée par un fournisseur d'applications et résidant sur un dispositif mobile pour mesurer un impact sur le réseau sans fil par le fonctionnement de l'application;
évaluer le fonctionnement de l'application pour identifier un ou plusieurs services utilisés pendant le fonctionnement de l'application;
déterminer un coût à payer par le fournisseur d'application pour le fonctionnement de l'application sur des dispositifs mobiles, dans lequel le coût déterminé est fondé sur l'impact mesuré de l'application sur le réseau sans fil et les services identifiés utilisés pendant le fonctionnement de l'application;
évaluer l'application et identifier les caractéristiques ou conséquences non liées aux performances de l'application ayant un impact sur l'opérateur de réseau ou un utilisateur de l'application sur un appareil mobile;
modifier les coûts déterminés en fonction des caractéristiques ou des conséquences identifiées non liées aux performances; et
facturer le fournisseur de l'application en fonction du coût modifié;
dans lequel le procédé comprend en outre la génération d'une interface permettant au fournisseur d'applications de visualiser l'impact mesuré de l'application sur le réseau sans fil et de fournir au fournisseur d'application une ou plusieurs recommandations sur les moyens permettant d'améliorer les performances de l'application et de diminuer le coût payé.

7. Procédé selon la revendication 6, dans lequel le coût déterminé baisse si les caractéristiques ou conséquences non liées aux performances sont favorables à l'opérateur de réseau ou favorables à l'utilisateur de l'application sur le dispositif mobile.

8. Procédé selon la revendication 6, dans lequel le coût déterminé augmente si les caractéristiques ou conséquences non liées aux performances sont préjudiciables à l'opérateur de réseau ou préjudiciables à l'utilisateur de l'application sur le dispositif mobile.

9. Procédé selon la revendication 6, dans lequel une conséquence non liée aux performances est une quantité de ressources d'assistance client utilisée par l'application, un taux de remboursement associé à l'application, une efficacité des outils d'auto-assistance de l'utilisateur associés à l'application, une conformité de l'application avec des directives d'interface utilisateur dictées par l'opérateur de réseau ou une disponibilité de l'application pour des dispositifs mobiles de fabrication différente.
